# EUROPÄISCHE PATENTANMELDUNG

(11) **EP 1 588 981 A1**
(43) Veröffentlichungstag der Anmeldung: **26.10.2005**
(21) Anmeldenummer: 05007042.4
(22) Anmeldetag: 31.03.2005
(51) Int. Cl.: B67C 3/26, A23G 9/12, A23G 9/28, G07F 13/10, G07F 9/10

(54) **Verfahren zur Herstellung von Frischeis und Ausgabevorrichtung für selbiges**

(30) Priorität: 31.03.2004 DE 102004016535
(71) Anmelder: Holzapfel, Gerhard, 73033 Göppingen (DE)
(72) Erfinder: Holzapfel, Gerhard, 73033 Göppingen (DE)
(74) Vertreter: Fürst, Siegfried

(57) **Zusammenfassung**

Die Erfindung betrifft ein Verfahren zur Herstellung von Frischeis sowie eine Ausgabevorrichtung für selbiges, mit der, auf ein Signal hin, eine portionierte Menge Frischeis in eine becherförmige Aufnahme hineingegeben und diese Aufnahme sodann in einem Entnahmeraum positioniert wird, für die Entnahme durch eine Person. Nach diesem Verfahren zur Herstellung von Frischeis wird der bei einem externen Hersteller hergestellte und für die Zwischenlagerung und den Transport keimfrei in einem Produktbehälter (8) abgefüllte fließfähige Eisansatz, ohne Umfüllung in einen weiteren (Vorrats-) Behälter, direkt von dem Produktbehälter (8) in den Zulauf einer Ausgabevorrichtung gehörenden Gefriereinheit (3) geleitet, wobei die in die Gefriereinheit (3) einfließende Menge von Eisansatz von der Anzahl der den Portionierer der Vorrichtung (1) verlassenden Portionen abhängig ist.

## Beschreibung

Die Erfindung betrifft ein Verfahren zur Herstellung von Frischeis und eine Ausgabevorrichtung für selbiges, mit der, auf ein Signal hin, eine portionierte Menge Frischeis in eine becherförmige Aufnahme, zum Beispiel eine Waffeltüte (auch Waffelhörnchen genannt) hineingegeben und diese Aufnahme sodann in einem Entnahmeraum positioniert wird, für die Entnahme durch eine Person.

Aus der Praxis sind verschiedene Eisverkaufssysteme bekannt. Diese Eisverkaufssysteme weisen jedoch noch Schwachpunkte auf. Neben Handhabungsproblemen sind auch Schwierigkeiten im Verkauf der Ware und beim Vertrieb der halbautomatischen Selbstbedienungs-Eisautomaten bekannt.

Bei diesen Eisautomaten gefriert und portioniert der Automat das Frischeis selbständig, die Handhabung der Waffel ist jedoch nicht automatisiert. Der Kunde wird, zum Beispiel über ein Sprachmodul oder Display, zum Ausführen der von ihm nötigen manuellen Handlungen angewiesen. Dies ist problematisch, da das Sprachmodul in der Regel nur einsprachig ist und in Urlaubsländern die Kunden unterschiedlicher Nationalität sind. Sind Anweisungen in mehreren Sprachen vorgesehen, muss der Eisautomat mit mehreren Sprachmodulen ausgestattet sein, was die Investitionskosten für eine solche Vorrichtung nicht unwesentlich erhöht. Bei der Handhabung der Waffel muss der Kunde zum Beispiel eine Klappe öffnen, die Waffel herausnehmen, eine weitere Tür öffnen und diese Waffel genau positioniert in eine Vorrichtung stecken, was zu Fehlbedienungen durch den Kunden führen kann und folglich auch zu einer Störung der Maschine. Man muss auch in Betracht ziehen, dass die Kunden dieser Eisautomaten Kleinkinder sowie ältere Personen sein können.

Solche Eisautomaten betreiben heißt aber auch, dass der ii einem Transportbehälter (Einweg-Büchse, Einweg-Kanister oder Einweg-Karton) bevorratete Eisansatz bei Umgebungsluft in einen mit einer verschließbaren Öffnung ausgestatteten Vorratsbehälter des Eisautomaten umgefüllt werden muss. Dieses System birgt unter anderem nachstehende Nachteile in sich:
- Durch das Einfüllen können schmutz- und keimhaltige Partikel mit ins Produkt, dem Eisansatz, gelangen;
- das eingefüllte Produkt ist nur sehr kurz haltbar, da Kontakt mit Luft erfolgte, folglich ist eine relativ schnelle Keimbildung nicht vermeidbar;
- es ist eine absolute Sorgfalt/Hygiene vom Betreiber des Eisautomaten erforderlich;
- teils (länderspezifisch) muss eine Gesundheitsbescheinigung des Betreibers/Bedieners des Eisautomaten vorgelegt werden, da ein Produktkontakt, zum Beispiel beim Nachfüllen des Eisansatzes in den Vorratsbehälter, nicht ausgeschlossen werden kann;
- der Betreiber kann mit Pulverprodukten den Eisansatz selbst anmischen, dadurch ist eine Verschmutzungs- und Verkeimungsgefahr des Produktansatzes permanent gegeben;
- bei einer erforderlichen Reinigung des Eisautomaten ist ein Produkthandling sehr problematisch, mitunter ist eine aufwändige Handhabung nötig;
- nachteilig ist zudem auch die Möglichkeit des Einbringens von Wettbewerbsprodukten in den Produktzyklus durch den Bediener des Eisautomaten, wodurch dem Betreiber nicht unerhebliche Verkaufseinbußen entstehen können.

Bei bekannten Eisausgabeautomaten erfolgt in der Regel eine manuelle Reinigung. Die Maschine muss vom Bediener/Betreiber mit sehr viel Aufwand gereinigt werden. Dies birgt erhebliche Schwachpunkte, deren Ausschaltung von der Gewissenhaftigkeit des Ausführenden sehr abhängig sind. Ein Reinigungszyklus ist nicht vorgegeben, dadurch kann die Reinigung zu lange hinausgezögert werden, wodurch eine Verkeimung des Produktes und der Ausgabevorrichtung entstehen kann. Zudem ist ein sehr hoher Aufwand nötig, da die Eisausgabevorrichtung zum Reinigen in Einzelteile zerlegt werden muss. Der Reinigungsaufwand beträgt mindestens ca. 1 bis 1 ½ Stunden, wobei eine hohe Gewissenhaftigkeit des Ausführenden zwingend erforderlich ist. Zum Beispiel ist eine Unterdosierung des Desinfektionsmittels möglich oder in der Ausgabevorrichtung sind nach seiner Reinigung noch Rückstände des Reinigungsmittels enthalten; eine Verschmutzung trotz Reinigung ist also möglich. Die Desinfektion ist nicht konstant garantiert.

Weiterhin können Bauteile und Dichtungen bei unsachgemäßem Zusammenbau beschädigt werden.

Daher besteht die Aufgabe der Erfindung darin, eine Ausgabevorrichtung für Frischeis sowie ein System zum Einsatz und zur Handhabung dieser Ausgabevorrichtung so weiterzuentwickeln, dass zumindest einige der vorgenannten Nachteile bekannter Systeme nicht mehr eintreten.

Die Aufgabe wird durch ein Verfahren zur Herstellung von Frischeis mit den Merkmalen des Patentanspruches 1 gelöst; die nachgeordneten Patentansprüche 2 bis 4 offenbaren Weiterbildungen und vorteilhafte Ausführungsbeispiele der Erfindung. Eine neue Ausgabevorrichtung für Frischeis offenbart der Patentanspruch 5. Weiterbildungen dieser neuen Ausgabevorrichtung sind in den Patentansprüchen 6 bis 10 genannt.

Die neue Ausgabevorrichtung für Frischeis ist nach der erfinderischen Grundidee ein vollautomatischer Selbstbedienungs-Eisautomat, der mit einem geschlossenen System betrieben wird. Das heißt einerseits, der Automat gefriert, portioniert und verkauft selbständig ein hochwertiges Milchspeiseeis, ohne Personaleinsatz beim Verkauf. Der Kunde zahlt den vorgegebenen Preis in Form von Münzen, Geldscheinen, EC-Karte, Chip- oder Global-Card. Die Ausgabevorrichtung startet nach Betätigung einer Signaltaste automatisch und zeigt über ein Display vorzugsweise den Status der Eisherstellung an. Nach Fertigstellung einer Eisportion und dessen Positionierung öffnet automatisch eine Tür des Automaten, die bevorzugt in der Frontfläche von selbigen angeordnet ist, und das in einer Aufnahme vorzugsweise in einer Waffeltüte, portionierte Eis kann entnommen werden. Bedienfehler durch den Kunden gibt es keine mehr.

Wesentlich ist bei dem neuen Verfahren zur Herstellung von Frischeis, dass der den Eisansatz enthaltende Transportbehälter in neuer Art und Weise zugleich Vorratsbehälter der neuen Ausgabevorrichtung ist. Hierzu ist der Gefrierstrecke der Ausgabevorrichtung eine Docking-Station zugeordnet, an der wenigstens ein Transportbehälter mit Eisansatz keimfrei einsetzbar ist. Eine Umfüllung des Eisansatzes von dem Transportbehälter in einen Vorratsbehälter der Ausgabevorrichtung findet somit nicht mehr statt. Damit ist auch ein Kontakt des Eisansatzes mit der Umgebungsluft vor der Ausgabe einer Eisportion unterbunden. Bei Abruf einer Eisportion wird also quasi direkt aus dem angedockten Produktbehälter heraus die entsprechende Menge Eisansatz in die Gefrierstrecke der Ausgabevorrichtung nachfließen.

Durch dieses neue, geschlossene System gibt es viele, fast grenzenlose, Einsatzmöglichkeiten, da es keine Beschränkungen durch Gesundheits-Behörden mehr geben kann, da der Betreiber/Bediener der Gesundheits-Behörden mehr geben kann, da der Betreiber/Bediener der neuen Ausgabevorrichtung mit dem Produktansatz nicht mehr in Berührung kommt.
Der fließfähige Eisansatz, das Produkt, wird bevorzugt bei einem externen, erfahrenen Eismix-Hersteller hergestellt und für die Zwischenlagerung und den Transport keimfrei in einen Behälter abgefüllt, in einen neuartigen Produktbehälter mit einem keimfrei haltbaren Auslassventil.
Dabei ist unter keimfrei zu verstehen, dass der in besagte Transportbehälter eingefüllte Eisansatz die administrativ vorgegebenen Grenzwerte nicht überschreitet.

Das neue System beinhaltet zudem auch die neue Vorrichtung. Der besagte Produktbehälter (Vorratsbehälter) ist speziell auf die neue Maschine abgestimmt. Mit dem neuen System ist ein kontinuierlicher Produktverkauf möglich. Es werden mehrere Produktbehälter in der Maschine, der Ausgabevorrichtung, bereitgehalten, die wahlweise oder nacheinander, wenn ein Behälter geleert ist, anzapfbar sind.
Weiterhin ist bei der neuen Vorrichtung vorgesehen, dass der Gefrierprozess des Eisansatzes in der bzw. den Gefrierräumen der Gefriereinheit erfolgt, wobei die Drehzahl von deren Förderschnecke und/oder die Fließgeschwindigkeit des Kühlmediums in Abhängigkeit der Menge des entnommenen Frischeis gesteuert ist.

Das Produkt, auch FREE-SY genannt, ist ein hochwertiges Milchspeise- und Fruchteis, welches cremig, leicht und hygienisch einwandfrei ist.

Das FREE-SY-Milchspeiseeis hat weniger Kalorien wie herkömmliche Eiscremes und einen niedrigeren Kühlbedarf. So hat nach einer Ausführung des Kerngedankens der Erfindung 100 g FREE-SY-Milchspeiseeis nicht mehr Kalorien als die gleiche Menge 20%-igen Fruchtquarkes. Durch das Aufschließen des Milchfettes in feine Partikel wird das FREE-SY-Eis besonders bekömmlich. Pasteurisierung macht den FREE-SY-Eisansatz keimfrei und garantiert somit eine mindestens 8-monatige Lagerung ohne Kühlung.

Durch den Kerngedanken der Erfindung, und zwar ein geschlossenes System zu bilden und einzusetzen besteht nun auch die Möglichkeit, die Ausgabevorrichtung kontrolliert vollautomatisch zu reinigen, wobei eine sensorische Erfassung der Notwendigkeit der Reinigung erfolgt oder selbige zeitgesteuert ist.

Ein weiterer Vorteil besteht darin, dass der Produktbehälter, der zugleich Transport- und Lagerbehälter für den Eisansatz ist, jederzeit entnommen und wieder eingesetzt werden kann, ohne dass das im Produktbehälter bevorratete Produkt mit Umgebungsluft in Kontakt kommt oder gar ausläuft.
Das bzw. die am Produktbehälter vorgesehenen Rückschlagventile garantieren in Verbindung mit der an der Gefriereinheit angeschlossenen Docking-Station das geschlossene System.

Zudem sind kurze Reinigungszeiten möglich, da der Reinigungszyklus automatisch steuerbar ist; ein Reinigungszyklus dauert nunmehr nur noch ca. 20 bis etwa 40 Minuten. Somit ist die Wartezeit bis zum Wiederverkauf von Eis minimal gegenüber bekannten Lösungen.
Durch die geplanten, die klimatischen Bedingungen des Standortes der Eisausgabevorrichtungen berücksichtigenden Reinigungs- und Wartungszyklen erhöht sich die Verfügbarkeit einer neuen Eisausgabevorrichtung erheblich.

Die zum Beispiel sensorisch erfassten Messwerte, die die Notwendigkeit einer Reinigung bzw. Wartung der Eisausgabevorrichtung signalisieren, können vorzugsweise telemetrisch an den Betreiber der Eisausgabevorrichtungen übermittelt werden (Fernwartung), so dass der Betreiber kurzfristig operativ handeln kann.

Eine andere Weiterbildung der Erfindung sieht vor, dass nach der Entkopplung des Produktbehälters von der Docking-Station, was nach einer Weiterbildung der Erfindung automatisiert erfolgen kann, ein in der Eisausgabevorrichtung angeordnetes Reinigungsmodul automatisch an die Anschlussstelle in der Docking-Station angeschlossen wird; für die Reinigung (vorsorgliche Desinfektion) bzw. Pflege der Kanäle und Hohlräume der Ausgabevorrichtung, in denen der Eisansatz bzw. das Frischeis hindurchgefördert wird. Das Reinigungsmodul kann mit dem Einlauf der Gefriereinheit und dem Auslauf des Portionierers verbunden wird, wobei der Durchfluss (Menge) und die Verweilzeit von Reinigungs-Desinfektionsmittel mittels der Steuereinheit der Ausgabevorrichtung steuerbar sind.
Nach Beendigung des Reinigungsvorganges wird dieses Reinigungsmodul wieder entfernt und der zeitweilig abgekoppelte Produktbehälter wieder mit dieser Anschlussstelle verbunden. Dieses automatisierte Abkoppeln und Wieder-Ankoppeln kann programmgesteuert (Zeitsteuerung) oder ferngesteuert erfolgen.
Sofern die Messwerte bezüglich der Wartung/Reinigung telemetrisch an den Betreiber übermittelt werden, können auch Messwerte bezüglich des Vorrates von Eisansatz, der verkauften Eismenge, dem Zustand des Entgeltmoduls und andere Messwerte übertragen werden. Diese Messwerte kann der Betreiber dann vielfältig analysieren und sehr aktuell betreffend dem weiteren Einsatz des betreffenden Eisausgabeautomaten entscheiden.

Nach einer vorteilhaften Ausführung der Erfindung ist vorgesehen, dass die Positionierung der Aufnahme (Waffeltüte) unter dem Portionierer mittels einer Hub-Dreheinheit der Ausgabevorrichtung erfolgt, wobei selbige die gefüllte Aufnahme (Waffeltüte) zur Entnahme durch den Kunden nach deren Füllung in einem Entnahmeraum einschwenkt.

Die neue Ausgabevorrichtung für Frischeis, mit der, auf ein Signal hin, eine portionierte Menge Frischeis in eine becherförmige Aufnahme, bevorzugt in eine Waffeltüte/Waffelhörnchen, hinein gegeben wird und bei der diese Aufnahme sodann in einem Entnahmeraum positioniert wird, für die Entnahme durch eine Person, umfasst bevorzugt einen Rahmen/Gestell (R) mit in selbigen angeordnetem Mittel zur Bevorratung von Eisansatz, mit wenigstens einer Gefriereinheit, welche einen Positionierer umfasst, sowie einen Waffelspender und ein Mittel zur Positionierung einer becherförmigen Aufnahme unter dem Portionierer. Speziell ist hier nun vorgesehen, dass das Mittel zur Bevorratung des Eisansatzes der für die Lagerung und den Transport des Eisansatzes vorgesehene Produktbehälter selbst ist.

Ein Ausführungsbeispiel der Erfindung ist in den Zeichnungen schematisiert dargestellt und wird folgend näher beschrieben. Es wird zugleich darauf hingewiesen, dass die zu diesem Ausführungsbeispiel genannte Gefriereinheit, die Hub-Dreheinheit und der Waffelspender jeweils in ihrem grundlegenden Aufbau und im Detail sowie in der Wirkung sich wesentlich von bekannten Vorrichtungen unterscheiden und somit neu und erfinderisch sind.

Die Zeichnungen zeigen dabei in schematischer Darstellung in Frontal-, Seiten- und/oder Draufsichten in:
- Figur 1a 1b und 1c: ein Gestell/Rahmen für die neue Ausgabevorrichtung für Frischeis;
- Figur 2a, 2b 2c und 2d: eine Hub-Dreheinheit für das Handling der Waffeltüten;
- Figur 3a, 3b und 3c: die Hub-Dreheinheit für das Handling der Waffeltüten im Gestell angeordnet;
- Figur 4 u. 4a: einen neuen Waffelspender mit oberer Führungseinheit für die aufrecht gelagerten Waffeltüten und neuem Vereinzeler;
- Figur 5a, 5b und 5c: eine neue Gefriereinheit mit vorgelagerter Docking-Station und am Ausgang der Gefriereinheit angeordneter Portioniereinheit;
- die Figuren 6a, 6b,6c und 6d: die neue Ausgabevorrichtung für Frischeis in Vorderansicht, zwei Seitenansichten und einer Draufsicht.

Bei den Darstellungen der neuen Ausgabevorrichtung 1 für Frischeis sind in allen Figuren zur besseren Darstellung/Erkennbarkeit der erfindungswesentlichen Merkmale äußere und innere Verkleidungsteile, Steuerungsmodule nebst Verbindungsleitungen und weitere nicht erfindungswesentliche Bauteile und Baugruppen nicht gezeichnet worden.

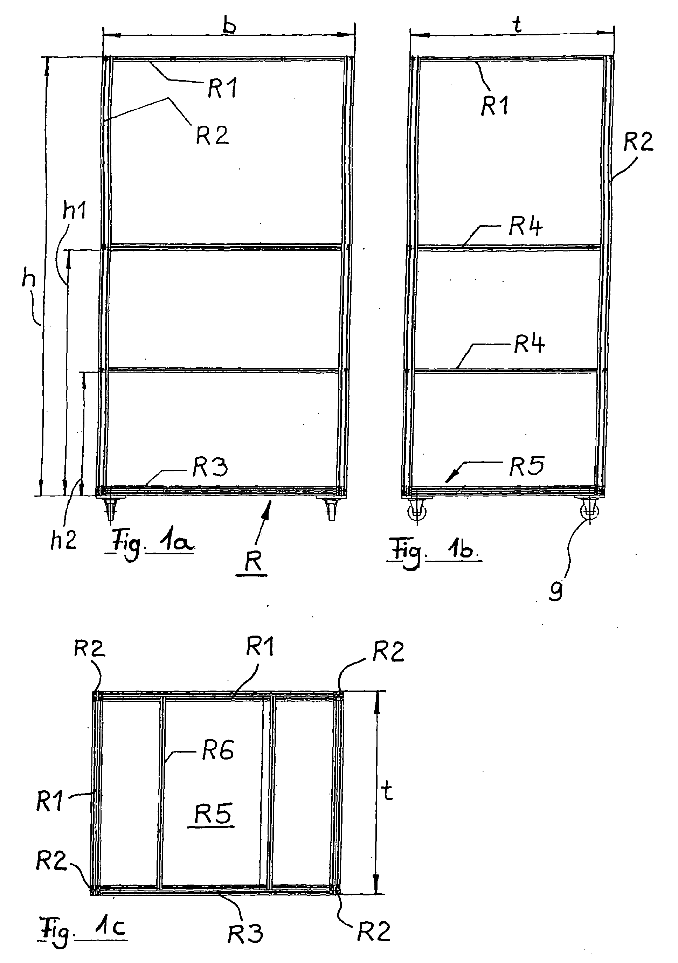

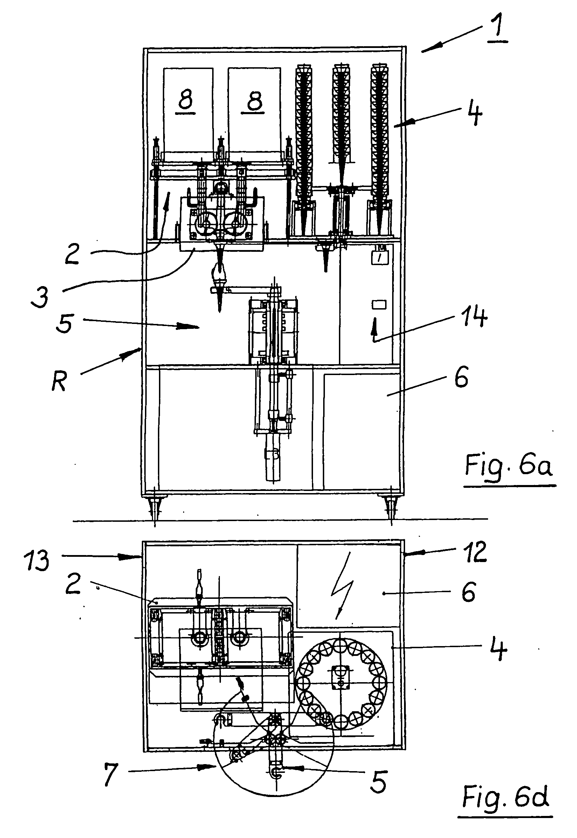

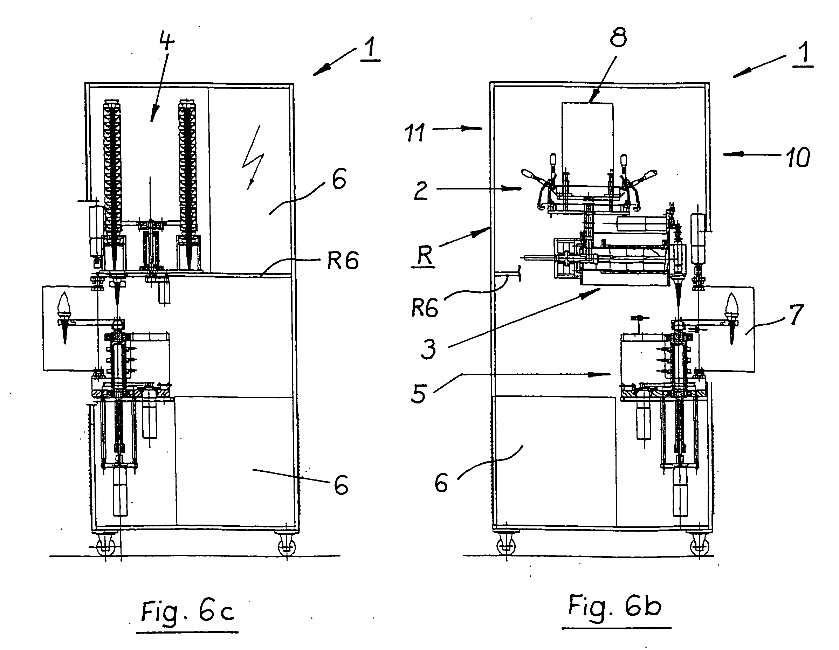

Die neue Ausgabevorrichtung 1 für Frischeis ist ohne äußere und innere Verkleidungsteile in den Figuren 6a, 6b, 6c und 6d in Frontal-, zwei Seiten- und einer Draufsicht gezeigt. In einem aus Rahmenteilen bestehenden Rahmen R sind im oberen Bereich eine Gefriereinheit 3, darüber positioniert eine Docking-Station 2 zur Aufnahme von Produktbehälter 8 angeordnet. Seitlich daneben befindet sich ein Waffelspender 4. Vorgenannte Einheiten sind im vorderen Bereich zur Frontfläche 10 hin angeordnet. Im hinteren oberen Bereich ist ein oder mehrere Räume für Baueinheiten zur Steuerung und Energieversorung vorgesehen. Im mittleren Bereich des Rahmens/Gestells R und teils in den unteren Bereich hineinragend ist eine Hub-Dreheinheit 5 vorgesehen, mit welcher eine zu befüllende Waffel vom Waffelspender 4 entnommen, sodann durch Schwenkbewegung unter der Gefriereinheit positioniert und nach Füllung durch eine weitere Schwenkung im Aufnahmeraum positioniert, von welcher aus dann die mit Frischeis gefüllte Waffel durch den Kunden entnommen werden kann. In Höhe des Entnahmeraumes befindet sich auch die Bedien- und Münzeinheit 14. Im unteren hinteren Bereich des Rahmens R ist dann noch ein oder mehrere weitere Räume 6 vorgesehen, in denen ebenfalls Baueinheiten zur Steuerung und ähnlichen Baueinheiten platziert werde können. Die Gefriereinheit 3 mitsamt der Docking-Station 2 und der Waffelspender 4 sind auf inneren Querstreben R6 angeordnet, die im Rahmen R in Höhe einer ersten Höhe h1 (s. Figur 1a und 1c) angeordnet sind. Die Hub-Dreheinheit 5 ist ebenfalls im Rahmen R auf inneren Querstreben R6 gehaltert, welche auf einer zweiten Höhe h2 im Rahmen R platziert sind. Die Rückenfläche der Ausgabevorrichtung 1 Bezugszeichen 12 und 13, die gesamte Höhe ist mit dem Bezugszeichen "h" bezeichnet.
Ein detaillierter Aufbau der vorgenannten Einheiten der neuen Ausgabevorrichtung 1 wird in den weiteren Figuren gezeigt.

Der grundsätzliche Aufbau des Rahmens R ist in den Figuren 1a, 1b und 1c gezeigt. Ausgehend von bodenseitigen Rahmenteilen R3, zwischen denen ein Boden R5 angeordnet ist, ragen vertikale Rahmenteile R2 nach oben, zwischen denen kopfseitige Rahmenteile R1 angeordnet sind, sodass ein quaderförmiges Gestell gebildet ist. In den Seitenwänden sind äußere Querstreben R4 zur Stabilisierung des Rahmens vorgesehen. Innerhalb des Rahmens sind innere Querstreben R6 vorgesehen, auf welchen jeweils die Baueinheiten der neuen Ausgabevorrichtung platziert und arretiert werden. Unterhalb des Bodens R5 sind Fußteile 9 in Form von Rollen vorgesehen, sodass die Ausgabevorrichtung bei Bedarf auf einfache Weise ortsveränderlich bewegbar ist. Die Gesamthöhe des Rahmens ist mit "h" bezeichnet, die Breite mit "b" und die Tiefe von der Frontfläche aus gesehen mit "t".

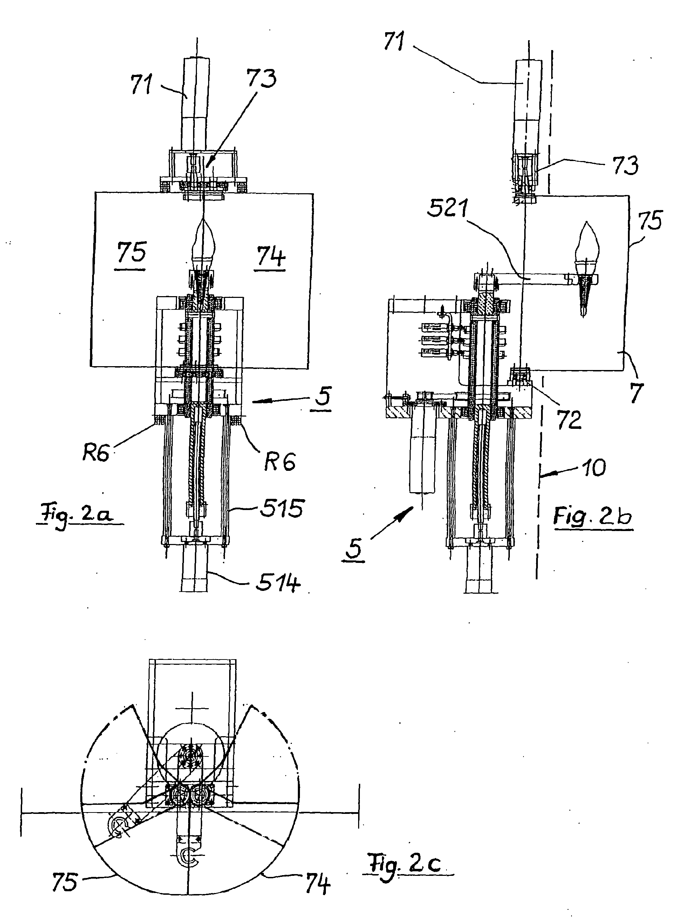

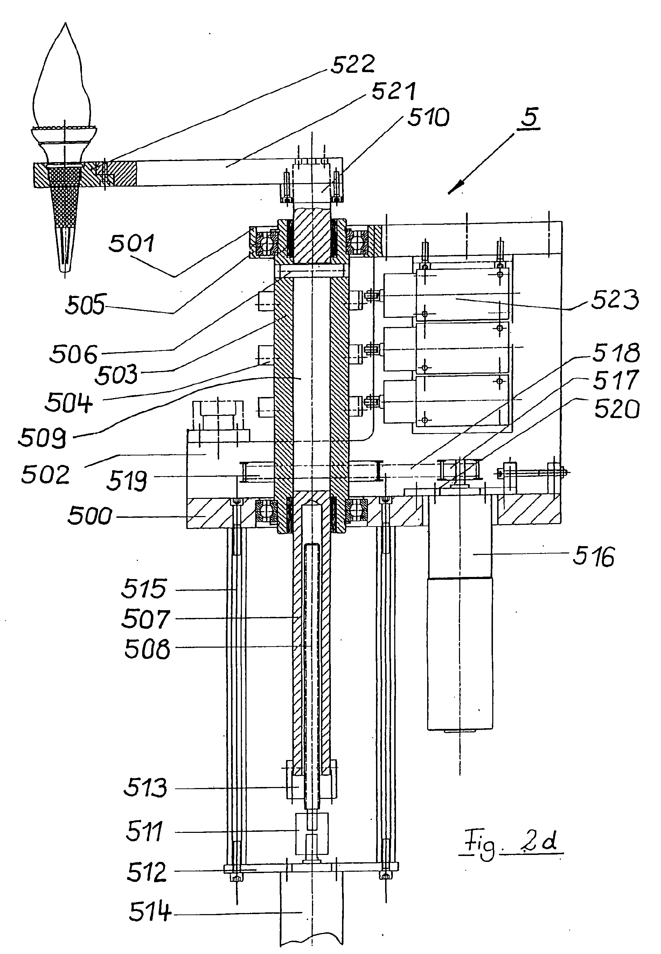

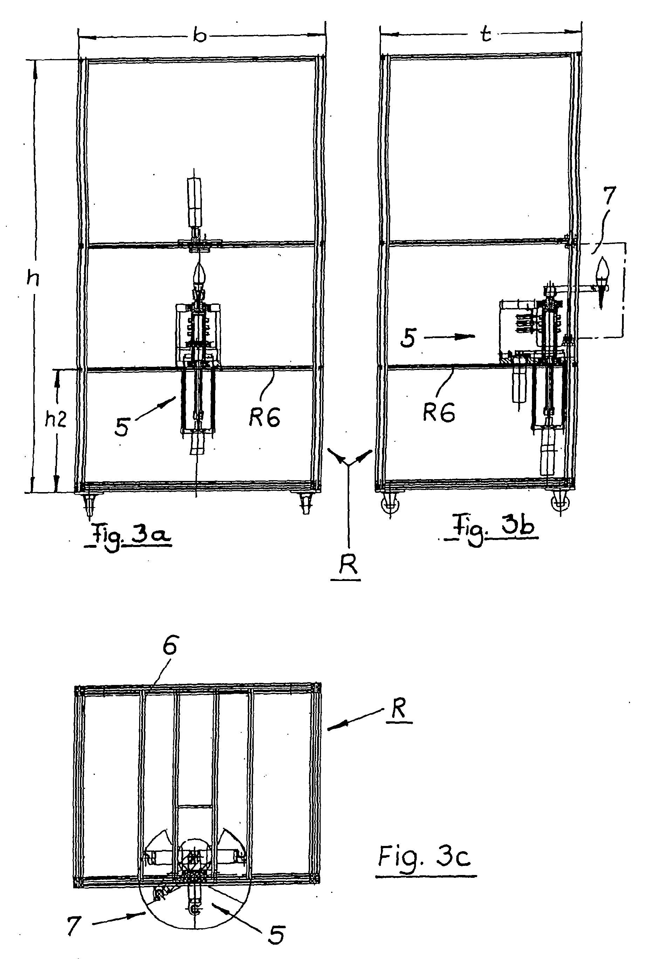

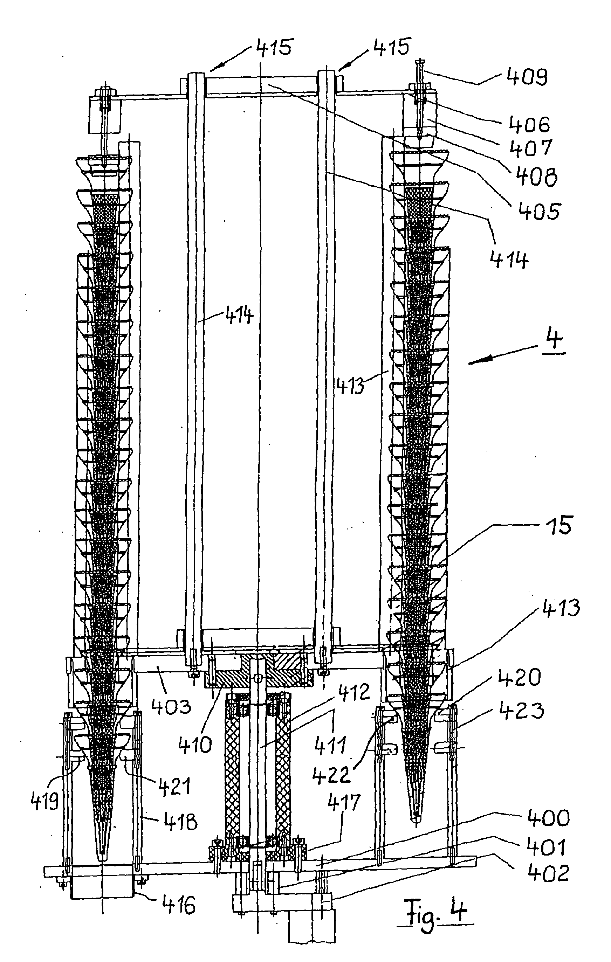

In den Figuren 3a, 3b und 3c sind in einer Frontal-, einer Seiten- und einer Draufsicht die Anordnung der Hub-Dreheinheit 5 im Rahmen gezeigt. Diese Hub-Dreheinheit 5 ist im Rahmen in etwa mittig in Richtung der Frontfläche 10 angeordnet, wobei die Frontfläche in diesem Bereich einen Aufnahmeraum 7 aufweist, der aus der Frontfläche 10 herausragt. Details hierzu sind in den Figuren 2a, 2b und 2c gezeigt.

Ein rechtes Türsegment 74 und ein linkes Türsegment 75 sind jeweils in einem unteren Lager 72 und einem oberen Lager 73, welche jeweils nebeneinander angeordnet sind, drehbar gelagert. Den oberen Lagern 73 ist ein Türmotor 71 zugeordnet, durch welchen die Türsegmente zu- und aufgeschwenkt werden können. Diese Schwenkbewegung ist mit den Pfeilen 76 bezeichnet. Die Schwenkbewegung zum Öffnen erfolgt auf ein Signal der Steuereinheit hin, nachdem eine mit Frischeis befüllte becherförmige Aufnahme (Waffeltüte) im Aufnahmeraum positioniert ist. Nach Entnahme der gefüllten Waffeltüte schließen die Türsegmente 74 und 75. Das Startsignal hierzu kann zeitgesteuert erfolgen oder über eine Lichtschranke.

Die Hub-Dreheinheit, deren Details in den Figuren 2a und 2b sowie 2d gezeigt sind, besteht aus einer unteren Platte 500, die auf inneren Querstreben R6 arretiert ist. Beabstandet durch eine Seitenplatte 502 ist parallel zur unteren Platte eine obere Platte 501 vorgesehen zwischen und in denen eine Drehführung 503 angeordnet ist. An der Mantelfläche der Drehführung 503 sind Schaltnocken 504 angeordnet, die Endschalter eines Schaltblockes 523 betätigen. Die Drehführung 503 ist in Kugellagern 505 drehbar positioniert. In einer zentrischen Durchgangsbohrung in der Drehführung 503 ist eine Welle 507 axial verschiebbar angeordnet. In axialer Richtung gesehen, ist etwa von der Mitte der Welle 507 aus in Richtung Endbereich ein Schlitz 509 vorgesehen, der von einem stiftförmigen Anschlag 506 durchgriffen wird, welcher in der Drehführung 503 arretiert ist. Oberhalb dieses Schlitzes 509 ist die Welle 507 in der Drehführung 503 gelagert. Auf dem oberen Ende 510 der Welle 507 ist ein Arm 521 mit seinem einen Ende befestigt, am anderen Ende des Armes 521 ist auswechselbar ein Greifteil 522 befestigt, welches zur Aufnahme einer Waffeltüte ausgebildet ist.

Der untere Abschnitt der Welle 507 enthält eine zentrisch angeordnete Gewindebohrung, in die eine Spindel 508 eingreift, welche über eine Kupplung 511 mit einem Motor 514 verbunden ist. Der Motor 514 ist an einer Motorplatte 512 befestigt, welche selbst durch Stelzen 515 beabstandet an der unteren Platte 500 befestigt ist. Die Welle 507 ist in ihrem unteren Ende noch mit einer Mutter 513 versehen. In dieser Mutter 513 ist die Spindel 508 gelagert. Bei Bewegung der Spindel 508 wird die Welle 507 in ihrer Längsachse nach oben oder unten bewegt. Diese Bewegung wird benötigt einerseits bei der Übernahme der Waffel aus dem Waffelspender und andererseits bei der Positionierung der Waffel unterhalb des Portionierers 310 der Gefriereinheit 3 (siehe Figur 6a).
Zur Erzeugung der Drehbewegung ist in der unteren Platte 500 ein Antrieb 516 vorgesehen, der mittels einer Lagerplatte 520 an der unteren Platte 500 befestigt ist. Am Antrieb 516 ist eine Synchronscheibe 517 angeordnet, deren Drehbewegung mittels einem Riemen 518 auf eine auf der Drehführung 503 angeordneten Synchronschreibe 519 überträgt. Die Steuersignale für den Antrieb 516 und den Motor 517 werden in der zentralen Steuereinheit der neuen Ausgabevorrichtung 1 erzeugt.

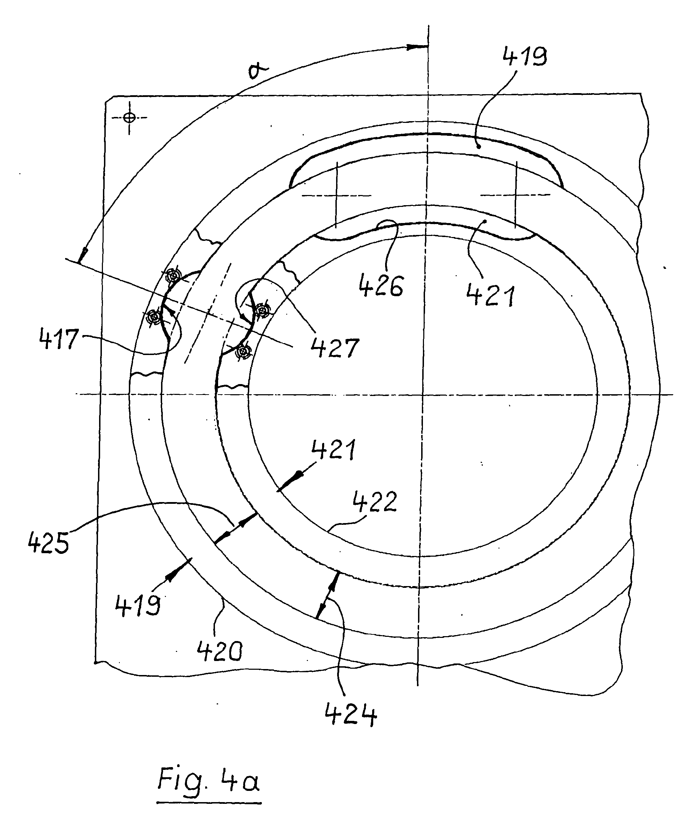

In der Figur 4 sind die Details zum Waffelspender 4 gezeigt. Die Grundplatte 400 ist auf hier nicht gezeigtem inneren Querstreben R6 positioniert und arretiert. Ausgehend von der Grundplatte 400 ist konzentrisch zu einer Achse eine Distanzhülse 412 aufragend angeordnet. In dieser Distanzhülse ist eine Welle 411 drehbar gelagert, deren grundplattenseitiges Ende mit einem Getriebemotor 402 verbunden ist, welcher selbst mittels Distanzhülsen 401 an der Grundplatte 400 befestigt ist. Die Distanzhülse 412 ist mit einem unteren Flansch 417 auf der Grundplatte 400 gehalten. Am oberen Ende der Welle 411 ist ein Flansch 410 befestigt, auf dem ein Aufnahmeteller 403 fest angeordnet ist. Im seitlichen Bereich dieses Aufnahmetellers 403 sind auf einer Kreisbahn nebeneinander eine Vielzahl von Aufnahmerohren 413 vorgesehen, in welchen die Waffeltüten gelagert werden. Konzentrisch zur Drehachse des Aufnahmetellers 403 sind aufragend mehrere Stabsäulen 414 angeordnet. Von oben her wird ein Flansch 405 mit seinen Bohrungen 415 auf die Stabsäulen 414 gesteckt.

An der Unterseite des Flansches 405 ist ein tellerförmiger Niederhalter 406 befestigt. Im äußeren Randbereich dieses Niederhalters 406 sind entsprechend der Anzahl der vorgesehenen Aufnahmerohre 413 nach unten zeigend Führungsteile 407 vorgesehen, die mittels einem Bolzen 409 je ein Zentrierstück 408 halten, bei mit Waffeltüten gefülltem Aufnahmerohr in die Öffnung der obersten Waffeltüte abgesenkt werden. Die Aufnahmerohre 413 ragen nach unten aus dem Aufnahmeteller 403 heraus. In etwa ein Fünftel des Höhenabstandes zwischen der Grundplatte 400 und der dem Aufnahmeteller 403. Damit die Waffeltüten nicht aus dem Aufnahmrohr 413 herausfallen, ist unter jedem Aufnahmerohr 413 in der Grundplatte 400 ein Gegenhalter angeordnet. In spezieller Ausbildung wird dieser Gegenhalter von einem auf Distanzbolzen 418 gelagertem oberen äußeren Ring 420 und einem oberen inneren Ring 422 gebildet, zwischen denen ein Ringschlitz vorhanden ist. Mittels Distanzhülsen beabstandet sind an den Distanzbolzen 418 unterhalb des durch die Ringe 420 und 422 gebildeten Gegenhalters ein unterer innerer Ring 421 und ein unterer äußerer Ring 419 angeordnet, zwischen denen ebenfalls ein Ringspalt gebildet ist. Versetzt um einen Winkel α sind im oberen Ringschlitz 424 eine langlochartige Erweiterung 426 und im unteren Ringspalt eine kreisförmige Erweiterung 427 vorgesehen.

Bei Drehbewegung des Aufnahmetellers 403 in vorgegebenen Rastern fällt im Bereich der langlochartigen Erweiterung 426 jeweils eine Waffeltüte vom oben liegenden Gegenlager in den darunterliegenden Ringspalt 425. Im Bereich der kreisförmigen Erweiterung 427 im unten liegenden Ringspalt 425 fällt die im Ringspalt vorwärts bewegte Waffeltüte in das Greifteil 522 der Hub-Dreheinheit 5.

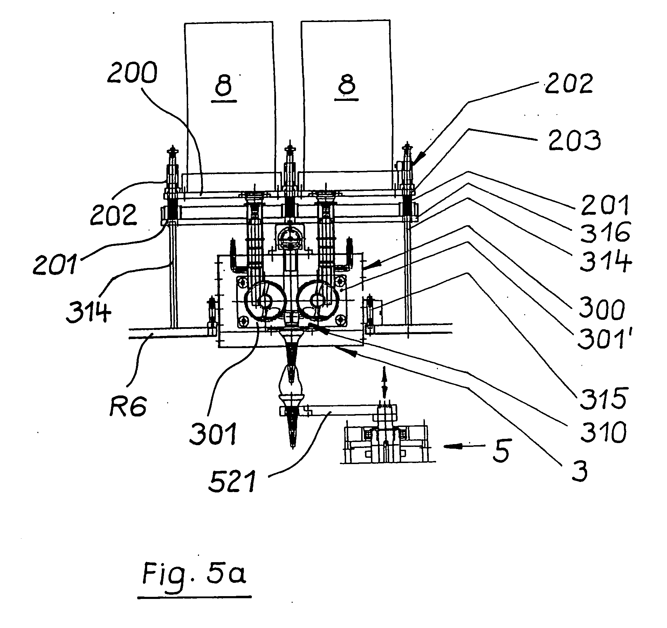

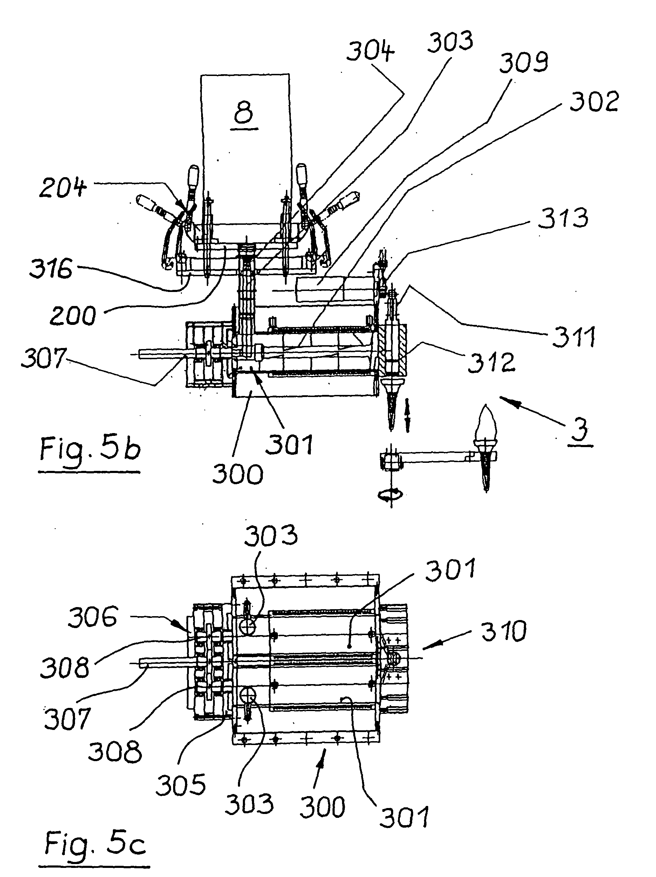

Die Figuren 5a, 5b und 5c zeigen weitere Details der Gefriereinheit 3 und der der Gefriereinheit 3 zugeordneten Docking-Station 2. Die Gefriereinheit 3 ist mittels Haltern 315 an inneren Querstreben R6 positioniert und arretiert. Die hier verwendete Gefriereinheit 3 ist mit zwei nebeneinander liegenden Gefrierräumen 301 und 301' ausgestattet. In jedem der beiden Gefrierräume 301 und 301' ist eine Föderschnecke 302 angeordnet. Auf einer Seite der Gefrierräume ragt nach oben aus dem gemeinsamen Gehäuse 300 jeweils ein Einfüllrohr 303 nach oben heraus, welches in einem Kupplungsteil 304 endet. Das Kupplungsteil wiederum ist in einer Basisplatte 316 gelagert. Zu der Basisplatte 316 ist oberhalb mittels Distanzstücken 201 beabstandet eine Grundplatte 200 der Docking-Station 2 angeordnet. Die Kupplungsteile 304 ragen bis in diese Grundplatte 200 hinauf. In diesen Kupplungsteilen 304 wird jeweils das Auslassventil eines Produktbehälters 8 positioniert. Die Produktbehälter 8 werden mittels mehreren Klemmteilen 204 auf der Grundplatte 200 arretiert. Zur festen Verbindung der Grundplatte 200 mit der Basisplatte 316 sind mehrere Verbindungsteile 202 vorgesehen, die an jeweils eine Distanzsäule 314 angreifen, welche die Basisplatte 316 und die Grundplatte 200 durchgreifen. Diese Distanzsäulen 314 sind auf inneren Querstreben R6 seitlich vom Gehäuse 300 angeordnet.

In Längsachse der Förderschnecken 302 gesehen ist außen am Gehäuse 300 an einer Frontseite mittels einem Flansch 305 ein Getriebe 306 angeordnet mit einer gemeinsamen Antriebswelle 307, die auf die jeweilige Welle 308 der beiden Förderschnecken 302 mittels Riemen oder Zahntrieb die nötige Drehbewegung überträgt. Auf der gegenüberliegenden Frontseite des Gehäuses 300 befindet sich der Auslass der Gefrierräume 301 und 301', die in einen Portionierer 310 einmünden. In diesem Portionierer 310 ist eine Bohrung 312 vorgesehen, in der ein Kolben 311 geführt ist, mittels einem Kupplungsteil 313 ist ein Kolben 311 mit einem Antrieb 309 wirkungsmäßig verbunden.

In der Figur 5b, im rechten unteren Teil ist zudem ohne Bezugszeichen der Arm 521 mitsamt Greifteil 522 gezeigt mitsamt möglicher Drehbewegung um eine Vertikalachse und der Axialbewegung des Armes 521 von einer unteren Position bis unter die Öffnung des Portionierers 310. Der Motor für die Antriebswelle 307 ist nicht gezeichnet, ebenso das Kühlaggregat und die Leitungen, die das Kühlaggregat und die Leitungen, mit welchen das Kühlmedium vom Kühlaggregat zu den Gefrierräumen 301 und 301' hin- und zurückbefördert wird, da diese bei dem gezeigten Ausführungsbeispiel an sich bekannte Mittel sind. Hervorzuheben ist jedoch, dass das Kühlaggregat als auch alle weiteren motorische Antriebe und die Steuereinheit mit üblicher Wechselspannung betrieben werden können, es ist kein Starkstromanschluss erforderlich.

### Bezugsziffernverzeichnis

- 1: Ausgabevorrichtung
- 2: Docking-Station
- 3: Gefriereinheit
- 4: Waffelspender
- 5: Hub-Dreheinheit
- 6: Räume für Baueinheiten zur Steuerung, Energieversorgung u.ä.
- 7: Entnahmeraum
- 8: Produktbehälter
- 9: Fußteile (Rollen)
- 10: Frontfläche
- 11: Rückenfläche
- 12, 13: Seitenflächen
- 14: Bedien- und Münzeinheit
- 15: Waffeltüte (becherartige Aufnahme)

- 71: Türmotor
- 72: untere Lager
- 73: obere Lager
- 74: rechtes Türsegment
- 75: linkes Türsegment
- 76: Schwenkbewegung (von Position 74 und 75)

- 200: Grundplatte
- 201: Distanzstück
- 202: Verbindungsteil
- 203: Durchgang in Position 200
- 204: Klemmteil

- 300: Gehäuse
- 301, 301': Gefrierräume
- 302: Förderschnecke
- 303: Einfüllrohr
- 304: Kupplungsteil
- 305: Flansch
- 306: Getriebe
- 307: Antriebswelle
- 308: Welle von Position 302
- 309: Antrieb für Portionierer
- 310: Portionierer
- 311: Kolben
- 312: Bohrung
- 313: Kupplungsteil (zwischen Position 309 und 311)
- 314: Distanzsäulen
- 315: Halter
- 316: Basisplatte

- 400: Grundplatte
- 401: Distanzhülsen
- 402: Getriebemotor
- 403: Aufnahmeteller
- 404: Wellen
- 405: Flansch
- 406: Niederhalter
- 407: Führungsteil
- 408: Zentrierstück
- 409: Bolzen
- 410: Flansch
- 411: Welle
- 412: Distanzhülse
- 413: Aufnahmerohr
- 414: Stabsäulen
- 415: Bohrungen
- 416: Fallrohr
- 417: unterer Flansch
- 418: Distanzbolzen
- 419: Ring (außen unten)
- 420: Ring (außen oben)
- 421: Ring (innen unten)
- 422: Ring (innen oben)
- 423: Distanzhülsen
- 424: Ringschlitz
- 425: Ringspalt
- 426: lanlochartige Erweiterung
- 427: kreisförmige Erweiterung

- 500: untere Platte
- 501: obere Platte
- 502: Seitenplatte
- 503: Drehführung
- 504: Schaltnocken
- 505: Kugellager
- 506: Anschlag (Stift)
- 507: Welle
- 508: Spindel
- 509: Schlitz
- 510: oberes Ende von Pos. 507
- 511: Kupplung
- 512: Motorplatte
- 513: Mutter
- 514: Motor
- 515: Stelzen
- 516: Antrieb
- 517: Synchronscheibe
- 518: Riemen
- 519: Synchronscheibe
- 520: Lagerplatte
- 521: Arm
- 522: Greifteil
- 523: Schaltblock (Endschalter)
- R: Rahmen/Gestell
- R1: kopfseitige Rahmenteile
- R2: vertikale Rahmenteile
- R3: bodenseitige Rahmenteile
- R4: äußere Querstreben
- R5: Boden
- R6: innere Querstreben
- h: gesamte Höhe
- h1: erste Höhe
- h2: zweite Höhe
- b: Breite
- t: Tiefe
- α: Winkel zwischen Positionen 426 und 427

## Patentansprüche

1. Verfahren zur Herstellung von Frischeis, bei dem in einer Ausgabevorrichtung von einem in selbiger bevorratetem fließfähigen Eisansatz nach Betätigung einer Taste einer Bedieneinheit einer Steuereinheit mittels einer Gefriereinheit und einem Portionierer portionsweise Frischeis in eine Aufnahme (Waffeltüte) gegeben wird,
**dadurch gekennzeichnet,**
**dass** der bei einem externen Hersteller hergestellte und für die Zwischenlagerung und den Transport keimfrei in einem Produktbehälter abgefüllte fließfähige Eisansatz, ohne Umfüllung in einen weiteren (Vorrats-) Behälter, direkt von dem Produktbehälter in den Zulauf der Gefriereinheit fließt, wobei die in die Gefriereinheit einfließende Menge von Eisansatz von der Anzahl der den Portionierer verlassenden Portionen abhängig ist.

2. Verfahren nach Anspruch 1,
**dadurch gekennzeichnet,**
**dass** der Gefrierprozess des Eisansatzes in der bzw. den Gefrierräumen der Gefriereinheit erfolgt, wobei die Drehzahl von deren Förderschnecke und/oder die Fließgeschwindigkeit des Kühlmediums in Abhängigkeit der Menge des entnommenen Frischeis gesteuert ist.

3. Verfahren nach Anspruch 1 oder 2,
**dadurch gekennzeichnet,**
**dass** die Positionierung der Aufnahme (Waffeltüte) unter dem Portionierer mittels einer Hub-Dreheinheit (5) der Ausgabevorrichtung (1) erfolgt, wobei selbige (5) die Aufnahme (Waffeltüte) nach deren Füllung in einem Entnahmeraum (7) einschwenkt, zur Entnahme durch den Kunden.

4. Verfahren nach Anspruch 1,
**dadurch gekennzeichnet,**
**dass** für die Reinigung (vorsorgliche Desinfektion) bzw. Pflege der Kanäle und Hohlräume der Ausgabevorrichtung (1), in denen der Eisansatz bzw. das Frischeis hinduchgefördert wird, ein Reinigungsmodul mit dem Einlauf (303, 304) der Gefriereinheit (3) und dem Auslauf des Portionierers verbunden wird, wobei der Durchfluss (Menge) und die Verweilzeit von Reinigungs-Desinfektionsmittel mittels der Steuereinheit der Ausgabevorrichtung (1) regelbar sind.

5. Ausgabevorrichtung für Frischeis, mit der, auf ein Signal hin, eine portionierte Menge Frischeis in eine becherförmige Aufnahme, bevorzugt in eine Waffeltüte/Waffelhörnchen, hineingegeben wird und bei der diese Aufnahme sodann in einem Entnahmeraum positioniert wird, für die Entnahme durch eine Person, umfassend einen Rahmen/Gestell (R) mit in selbigen angeordnetem Mittel zur Bevorratung von Eisansatz, mit wenigstens einer Gefriereinheit (3), welche einen Positionierer umfasst, sowie einem Waffelspender (4) und einem Mittel zur Positionierung einer becherförmigen Aufnahme unter dem Portionierer,
**dadurch gekennzeichnet,**
**dass** das Mittel zur Bevorratung des Eisansatzes der für die Lagerung und den Transport des Eisansatzes vorgesehene Produktbehälter (8) selbst ist.

6. Ausgabevorrichtung nach Anspruch 5,
**dadurch gekennzeichnet,**
**dass** der den Eisansatz enthaltende Produktbehälter (8) an einer der Gefrierstrecke (3) der Ausgabevorrichtung (1) vorgelagerten Docking-Station (2) zeitweise angeordnet ist, wobei die Koppelstelle durch entsprechende Gestaltung des Ventils des Produktbehälters (8) im Wesentlichen keimfrei gehalten werden kann.

7. Ausgabevorrichtung nach Anspruch 5 oder 6,
**dadurch gekennzeichnet,**
**dass** in dem aus Rahmenteilen (R1, ...,R6) bestehenden Rahmen (R) im oberen Bereich die Gefriereinheit (3), darüber die zur Aufnahme von wenigstens einem Produktbehälter 8 ausgebildete Docking-Station (2), und seitlich daneben der Waffelspender (4) angeordnet sind, bevorzugt im vorderen Bereich zur Frontfläche (10) hin.

8. Ausgabevorrichtung nach Anspruch 5, 6 oder 7,
**dadurch gekennzeichnet,**
**dass** im mittleren Bereich des Rahmens/Gestells (R) und teils in den unteren Bereich hineinragend die Hub-Dreheinheit (5) angeordnet ist.

9. Ausgabevorrichtung nach Anspruch 5, 6, 7 oder 8,
**dadurch gekennzeichnet,**
**dass** der Waffelspender (4) ein im Wesentlichen oberhalb seines Aufnahmetellers (403) angeordnetes, drehbares Aufnahmekarussel, bestehend aus einer Vielzahl von Waffeltüten (15) aufnehmenden, konzentrisch zu einer Drehachse positionierten Aufnahmerohren (413), aufweist und unterhalb von dem Aufnahmeteller (403) Mittel zur Vereinzelung der bevorrateten Waffeltüten (15) und Mittel zur Übergabe einer Waffeltüte (15) an ein Greifteil (522) der Hub-Dreheinheit (5) angeordnet sind.

10. Ausgabevorrichtung nach Anspruch 9,
**dadurch gekennzeichnet,**
**dass** die Mittel zur Vereinzelung der bevorrateten Waffeltüten (15) und Mittel zur Übergabe einer Waffeltüte (15) an ein Greifteil (522) der Hub-Dreheinheit (5) zwei übereinander und mit einem Abstand zueinander angeordnete Ringe (420, 422; 419, 421) sind, die jeweils einen konzentrischen Ringspalt (424, 425) aufweisen, der eine abschnittsweise selbigen verbreiternde Erweiterung (426 bzw. 427) besitzt, wobei diese beiden Erweiterungen (426 bzw. 427) unter einem Winkel (α) zueinander versetzt angeordnet sind.
